(19) **Europäisches Patentamt / European Patent Office / Office européen des brevets**

(11) **EP 4 134 461 A1**

(12) # EUROPEAN PATENT APPLICATION
published in accordance with Art. 153(4) EPC

(43) Date of publication:
**15.02.2023 Bulletin 2023/07**

(21) Application number: **21783137.9**

(22) Date of filing: **24.03.2021**

(51) International Patent Classification (IPC):
**C22C 38/00** $^{(1974.07)}$ **C21D 9/46** $^{(1968.09)}$
**C22C 38/40** $^{(1974.07)}$ **C22C 38/60** $^{(1974.07)}$

(52) Cooperative Patent Classification (CPC):
**C21D 9/46; C22C 38/00; C22C 38/40; C22C 38/60;**
**Y02P 10/20**

(86) International application number:
**PCT/JP2021/012196**

(87) International publication number:
**WO 2021/205876 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2020 JP 2020071069**

(71) Applicant: **NIPPON STEEL Stainless Steel Corporation**
**Tokyo 100-0005 (JP)**

(72) Inventors:
- **YOSHIMURA, Yuta**
  **Tokyo 100-0005 (JP)**
- **HIRAKAWA, Naoki**
  **Tokyo 100-0005 (JP)**
- **ISHIMARU, Eiichiro**
  **Tokyo 100-0005 (JP)**

(74) Representative: **Plasseraud IP**
**66, rue de la Chaussée d'Antin**
**75440 Paris Cedex 09 (FR)**

(54) **FERRITIC STAINLESS STEEL, AND METHOD FOR MANUFACTURING FERRITIC STAINLESS STEEL**

(57) Provided is a ferritic stainless steel and the like which can reduce stretcher strains even without temper rolling and which has high press formability. The ferritic stainless steel is defined in terms of contents of respective alloy elements, and has a martensite area ratio of not less than 1.0% but less than 15.0%, a yield elongation of not more than 2.0%, and an elongation after fracture of not less than 22.0%.

FIG. 1

```
        START
          │
   ┌──────────────┐
   │ MELTING STEP │──S1
   └──────────────┘
          │
   ┌──────────────────┐
   │ HOT ROLLING STEP │──S2
   └──────────────────┘
          │
   ┌──────────────────┐
   │ SOFTENING STEP   │──S3
   └──────────────────┘
          │
   ┌──────────────────┐
   │ COLD ROLLING STEP│──S4
   └──────────────────┘
          │
   ┌──────────────────┐
   │ ANNEALING STEP   │──S5
   └──────────────────┘
          │
         END
```

**EP 4 134 461 A1**

**Description**

Technical Field

The present invention relates to a ferritic stainless steel and a method for producing the ferritic stainless steel.

Background Art

In cases where ferritic stainless steels are applied to electronic appliance products and cooking utensils, such a ferritic stainless steel is required to have high workability and a clean appearance. However, in a ferritic stainless steel which contains SUS430, minute irregularities called stretcher strains occur due to a yield elongation of several percent during processing. This results in deterioration in surface property. In view of the above, Patent Literature 1 discloses a stainless steel sheet which has been subjected to temper rolling for reducing stretcher strains.

Citation List

[Patent Literature]

[Patent Literature 1]
Japanese Patent No. 3592840

Summary of Invention

Technical Problem

However, in the above-described conventional technique, the number of steps is increased due to the temper rolling. This leads to a problem in that productivity of the stainless steel sheet is deteriorated and production cost of the stainless steel sheet increases. An object of an aspect of the present invention is to provide a ferritic stainless steel and the like which can reduce stretcher strains even without temper rolling and which has high press formability.

Solution to Problem

In order to solve the above problem, a ferritic stainless steel in accordance with an aspect of the present invention includes not more than 0.12% of C, not more than 1.0% of Si, not more than 1.0% of Mn, not more than 1.0% of Ni, 12.0% to 18.0% of Cr, not more than 0.10% of N, and not more than 0.50% of Al, in percent by mass, and the other part composed of Fe and an inevitable impurity, the ferritic stainless steel having a martensite phase whose area ratio is not less than 1.0% but less than 15.0% in a cross section obtained by cutting along a plane that is parallel to a rolling direction and that is also perpendicular to a rolling width direction, and a remaining part mainly composed of a ferrite phase, the remaining part being obtained by removing the martensite phase from the ferritic stainless steel, and the ferritic stainless steel having a yield elongation of not more than 2.0% and an elongation after fracture of not less than 22.0%.

Advantageous Effects of Invention

An aspect of the present invention makes it possible to provide a ferritic stainless steel and the like which can reduce stretcher strains even without temper rolling and which has high press formability.

Brief Description of Drawings

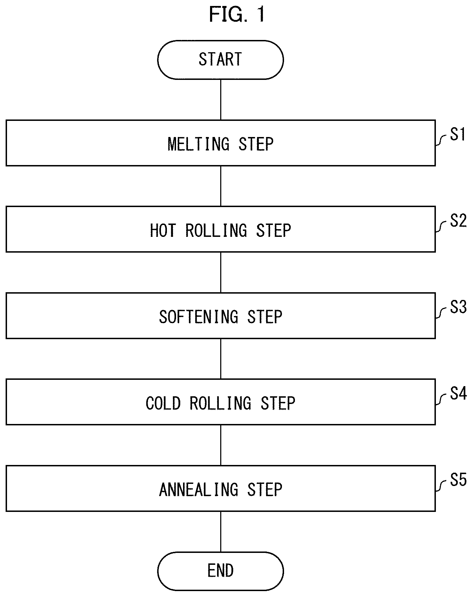

Fig. 1 is a flowchart showing a method for producing a ferritic stainless steel in accordance with an embodiment of the present invention.

Description of Embodiments

The following description will discuss in detail an embodiment of the present invention. Note that in the present specification, the content of each alloy element with respect to a ferritic stainless steel (hereinafter, referred to as "stainless steel") is referred to simply as "content". Moreover, note that the notation "%" relevant to the content is intended to mean "percent by mass" unless otherwise noted. Further, with regard to the numerical values X1 and X2 (note X1 < X2), "X1 to X2" means "not less than X1 and not more than X2".

Further, in the present specification, the term "martensite area ratio" is used to refer to an area ratio of a martensite phase in a cross section of a stainless steel, the cross section being obtained by cutting a stainless steel along a plane that is parallel to a rolling direction of the stainless steel and that is also perpendicular to a rolling width direction of the stainless steel. In other words, the martensite area ratio refers to a ratio of an area of a martensite phase relative to an area of a cross section of a stainless steel, the cross section being obtained by cutting along a plane that is parallel to the rolling direction of the stainless steel and that is also perpendicular to the rolling width direction of the stainless steel.

As a result of diligent studies, the inventors of the present invention have found that in order to decrease yield elongation and consequently reduce stretcher strains, dispersion of the martensite phase is effective. Although the martensite phase has high strength, the martensite phase has, as its property, low yield stress. At the same time, the martensite phase advantageously retains, in the martensite phase, solid-solution carbon and solid-solution nitrogen which are factors that lead to yield elongation. Accordingly, the martensite phase is effective for decreasing yield elongation. However, dispersion of an excessive amount of the martensite phase leads to characteristic deterioration such as corrosion resistance deterioration or ductility deterioration which is associated with increase in strength. In light of the above, the inventors of the present application have found that dispersion of a moderate amount of the martensite phase makes it possible to provide a ferritic stainless steel which can reduce stretcher strains even without temper rolling and which has high press formability.

[Index value]

An index value expressed by the following expression (1) (hereinafter, referred to as "index value") is an index which indicates a maximum amount of an austenite phase that is generated by annealing.

$$(\text{Index value}) = 420\text{C} - 11.5\text{Si} + 7\text{Mn} + 23\text{Ni} - 11.5\text{Cr} -$$
$$12\text{Mo} + 9\text{Cu} - 49\text{Ti} - 52\text{Al} + 470\text{N} + 189 \cdots (1)$$

In the above expression (1), each of element symbols indicates a percent-by-mass concentration of that element. It should be noted here that the austenite phase that is generated during annealing may be transformed to a martensite phase in a cooling process. The maximum amount of the austenite phase generated by annealing is controlled by setting the index value to not less than 15 and not more than 50. This makes it easy to appropriately regulate the amount of the martensite phase which is generated in the cooling process. Accordingly, by setting the index value to not less than 15 and not more than 50, the martensite area ratio described later is easily regulated to be not less than 1.0% but less than 15.0%.

[Alloy components]

The present invention is applied to, but not limited to, for example, a stainless steel which contains components described below. The stainless steel in accordance with an embodiment of the present invention can contain various components in addition to the following components.

<C: not more than 0.12%>

C is an important element which generates, by forming a carbide with Cr, an interface which becomes a dislocation source when the stainless steel is deformed. However, in a case where C is excessively added, an excessive martensite phase tends to be produced. This results in deterioration in ductility. Therefore, the content of C is set to not more than 0.12%. In order to generate the martensite phase, the content of C is preferably not less than 0.030%.

<Si: not more than 1.0%>

Si has an effect as a deoxidizing agent in a melting step. However, in a case where Si is excessively added, the stainless steel is hardened. This results in deterioration in ductility. Therefore, the content of Si is set to not more than 1.0%.

<Mn: not more than 1.0%>

Mn has an effect as a deoxidizing agent. However, in a case where Mn is excessively added, the amount of MnS generated increases. This results in deterioration in corrosion resistance of the stainless steel. Therefore, the content of Mn is set to not more than 1.0%.

<Ni: not more than 1.0%>

Ni is an austenite former, and is also an element which is effective for controlling the martensite area ratio and strength after annealing. However, in a case where Ni is excessively added, (i) the austenite phase is stabilized more than necessary, so that the ductility of the stainless steel deteriorates, and (ii) raw material cost of the stainless steel is increased. Therefore, the content of Ni is set to not more than 1.0%.

<Cr: 12.0% to 18.0%>

Cr is necessary to form a passive film on a surface of a cold-rolled steel sheet so as to enhance the corrosion resistance. However, in a case where Cr is excessively added, the ductility of the stainless steel is deteriorated. Therefore, the content of Cr is set to 12.0% to 18.0%.

<N: not more than 0.10%>

N is an important element which generates, by forming a nitride with Cr, an interface which becomes a dislocation source when the stainless steel is deformed. However, in a case where N is excessively added, an excessive martensite phase tends to be produced. This results in deterioration in ductility. Therefore, the content of N is set to not more than 0.10%.

<Al: not more than 0.50%>

Al is an element effective for deoxidation. At the same time, Al can reduce $A_2$ inclusions which adversely affect press workability. However, in a case where Al is excessively added, surface defects increase. Therefore, the content of Al is set to not more than 0.50%.

<Mo: preferably not more than 0.5%>

Mo is an element effective for improving the corrosion resistance. However, in a case where Mo is excessively added, the raw material cost of the stainless steel increases. Therefore, the content of Mo is preferably set to not more than 0.50%.

<Cu: preferably not more than 1.0%>

Cu is an element effective for improving the corrosion resistance. The content of Cu is preferably set to not more than 1.0%.

<O: preferably not more than 0.01%>

O generates non-metallic inclusions and decreases an impact value and reduces fatigue life. Therefore, the content of O is preferably set to not more than 0.01%.

<V: preferably not more than 0.15%>

V is an element effective for improving hardness and strength. However, in a case where V is excessively added, the raw material cost of the stainless steel increases. Therefore, the content of V is preferably set to not more than 0.15%.

<B: preferably not more than 0.10%>

B is an element effective for improving toughness. However, this effect saturates when the content of B exceeds 0.10%. Therefore, the content of B is preferably set to not more than 0.10%.

<Ti: preferably not more than 0.50%>

Ti forms a carbide with a solid solution C or a nitride with a solid solution N so that C and N are immobilized, the solid solution C and the solid solution N each being a cause of stretcher strains. This makes it possible to reduce stretcher strains. However, Ti is an expensive element. Accordingly in a case where Ti is excessively added, the raw material cost of the stainless steel increases. Therefore, the content of Ti is preferably set to not more than 0.50%.

<Co: preferably 0.01% to 0.50%>

Co is an element effective for improving the corrosion resistance and heat resistance. However, in a case where Co is excessively added, the raw material cost of the stainless steel increases. Therefore, the content of Co is preferably set to 0.01% to 0.50%.

<Zr: preferably 0.01% to 0.10%>

Zr is an element effective for denitrification, deoxidation, and desulfurization. However, in a case where Zr is excessively added, the raw material cost of the stainless steel increases. Therefore, the content of Zr is preferably set to 0.01% to 0.10%.

<Nb: preferably 0.01% to 0.10%>

Nb, like Ti, forms a carbide with a solid solution C or a nitride with a solid solution N so that C and N are immobilized, the solid solution C and the solid solution N each being a cause of stretcher strains. This makes it possible to reduce stretcher strains. However, Nb is an expensive element. Accordingly in a case where Nb is excessively added, the raw material cost of the stainless steel increases. Therefore, the content of Nb is preferably set to 0.01% to 0.10%.

<Mg: preferably 0.0005% to 0.0030%>

Mg forms an Mg oxide with Al in molten steel and acts as a deoxidizing agent. However, in a case where Mg is excessively contained, the toughness of the stainless steel is deteriorated. This consequently deteriorates producibility of the stainless steel. Therefore, in a case where Mg is contained, the content of Mg is preferably set to 0.0005% to 0.0030%, and more preferably set to not more than 0.0020%.

<Ca: preferably 0.0003% to 0.0030%>

Ca is an element effective for degassing. The content of Ca is preferably set to 0.0003% to 0.0030%.

<Y: preferably 0.01% to 0.20%>

Y is an element effective for improving hot workability and oxidation resistance. However, these effects saturate when the content of Y exceeds 0.20%. Therefore, the content of Y is preferably set to 0.01% to 0.20%.

<Rare earth metal(s) excluding Y: preferably 0.01% to 0.10% in total>

Like Y, a rare earth metal(s) (REM(s)) excluding Y, such as Sc and La, are effective for improving the hot workability and the oxidation resistance. However, these effects saturate when the content of the REM(s) exceeds 0.10%. Therefore, the content of the REM(s) excluding Y is preferably set to 0.01% to 0.10%.

<Sn: preferably 0.001% to 0.500%>

Sn is an element effective for improving the corrosion resistance. However, in a case where Sn is excessively added, the hot workability is deteriorated and tenacity is lowered. Therefore, the content of Sn is preferably set to 0.001% to 0.500%.

<Sb: preferably 0.001% to 0.500%>

Sb is effective for improving the workability by promoting deformation band generation during rolling. However, in a case where Sb is excessively contained, the effect of Sb saturates and further, the workability is deteriorated.

Therefore, in a case where Sb is contained, the content of Sb is preferably set to 0.001% to 0.500%, and more preferably set to not more than 0.200%.

<Pb: preferably 0.01% to 0.10%>

Pb is an element effective for improving free machinability. The content of Pb is preferably set to 0.01% to 0.10%.

<W: preferably 0.01% to 0.50%>

W is an element effective for improving high-temperature strength. However, in a case where W is excessively added, the raw material cost of the stainless steel increases. Therefore, the content of W is preferably set to 0.01% to 0.50%

<Others>

The other part other than the above-mentioned components is composed of Fe and inevitable impurities. In the present specification, the inevitable impurity refers to an impurity which is inevitably mixed in manufacturing. The content of the inevitable impurity is preferably a lowest possible content.

[Method for producing stainless steel]

Fig. 1 is a flowchart showing an example of a method for producing a ferritic stainless steel in accordance with an embodiment of the present invention. In order to produce the stainless steel, first, in a melting step S1, a steel slab is prepared by melting a stainless steel which contains the above components. In the melting step S1, a common melting device and common melting conditions for stainless steel can be used.
In a hot rolling step S2, the steel slab is hot-rolled, so that a hot-rolled steel sheet is prepared. In the hot rolling step S2, a common hot rolling device and common hot rolling conditions for stainless steel can be used. In a softening step S3, the hot-rolled steel sheet is softened by heat treatment at 500°C to 1100°C. The softening step S3 may be omitted, depending on, for example, the composition of the stainless steel or the hot rolling conditions or cold rolling conditions.
In a cold rolling step S4, cold rolling is carried out on the hot-rolled steel sheet after the softening step S3, or on the hot-rolled steel sheet after the hot rolling step S2 in a case where the softening step S3 can be omitted. A cold-rolled steel sheet is thus prepared. In the cold rolling step S4, a common cold rolling device and common cold rolling conditions for stainless steel can be used.
In an annealing step S5, the cold-rolled steel sheet is annealed. The highest annealing temperature (°C), which is the maximum temperature in the annealing step S5, is set as follows. First, TA expressed by the following expression (2) is calculated for the composition of the steel slab. The TA may be calculated in advance.

$$TA = 35 \times (Cr + 1.72Mo + 2.09Si + 4.86Nb + 8.29V + 1.77Ti + 21.4Al + 40B - 7.14C - 8.0N - 3.24Ni - 1.89Mn - 0.51Cu) + 310 \cdots (2)$$

Note that in the above expression (2), each of element symbols represents a percent-by-mass concentration of that element.
In a case where TA is less than 921, the highest annealing temperature (°C) is set to not less than $0.65 \times TA + 291$ and not more than $1.10 \times TA - 48$. On the other hand, in a case where TA is not less than 921, the highest annealing temperature (°C) is set to not less than $0.65 \times TA + 291$ and not more than 1050°C.
It should be noted here that TA is an indication of an austenite transformation temperature. When the temperature in the annealing step S5 exceeds TA, the amount of austenite increases. Moreover, when the temperature is further increased, the amount of austenite turns to decrease after having reached a peak amount. The austenite phase can be transformed to a martensite phase during a cooling process. Therefore, in order to cause the martensite area ratio (described later) to be not less than 1.0% but less than 15.0%, it is necessary to set the highest annealing temperature to a temperature of not less than TA and not more than the temperature at which the amount of austenite does not increase too much.

However, TA is an indication on a regression equation, and TA differs from an actual austenite transformation temperature. In light of this, the inventors of the present invention have made diligent studies. As a result, the inventors have found that in a case where TA is less than 921, the martensite area ratio can be arranged to be not less than 1.0% but less than 15.0% by setting the highest annealing temperature (°C) to a temperature of not less than $0.65 \times$ TA + 291 and not more than $1.10 \times$ TA - 48.

In a case where TA is not less than 921, the peak amount itself of the austenite phase is small. Accordingly, even in a case where all of the peak amount of the austenite phase was transformed from the austenite phase to the martensite phase, the martensite area ratio could be not less than 1.0% but less than 15.0%. Therefore, in a case where TA is not less than 921, there is no need to limit the upper limit of the highest annealing temperature (°C) to $1.10 \times$ TA - 48. In this case, annealing at an excessively high temperature leads to coarsening of crystal grains. This consequently leads to characteristic deterioration such as skin roughness during processing. Thus, the upper limit of the highest annealing temperature is set to 1050°C.

In the annealing step S5, a temperature increase rate is preferably set to not less than 10°C/s. In a case where the temperature increase rate is not less than 10°C/s, it is possible to shorten a heating-up period in the annealing step S5. This consequently makes it possible to shorten time necessary for production of the ferritic stainless steel. Therefore, it is possible to improve productivity of the ferritic stainless steel. Further, it is preferable that a soaking time at the highest annealing temperature in the annealing step S5 be set to not less than 5 seconds. In a case where the soaking time is not less than 5 seconds, it is possible to reliably produce the austenite phase during soaking. The austenite phase transforms to the martensite phase during cooling. Accordingly, in a case where the soaking time is set to not less than 5 seconds, the martensite area ratio (described later) can be more easily regulated to be not less than 1.0% but less than 15.0%.

In the annealing step S5, a cooling rate is set to not less than 5.0°C/s. As described later, in a case where the cooling rate is less than 5.0°C/s, it takes time for cooling from the highest annealing temperature. This causes the austenite phase to transform to a ferrite phase in a stable state. Accordingly, the martensite area ratio is decreased, and the yield elongation is increased. Therefore, in order to decrease the yield elongation, the cooling rate in the annealing step S5 is set to not less than 5.0°C/s.

[Martensite area ratio]

In an embodiment of the present invention, a remaining part that is obtained by excluding the martensite phase from the stainless steel is mainly composed of the ferrite phase. As the martensite area ratio increases, the yield elongation decreases and stretcher strains are reduced. However, in a case where the martensite area ratio is excessively high, the ductility of the stainless steel is deteriorated. This makes press forming difficult. Therefore, the martensite area ratio of the stainless steel in the present embodiment is not less than 1.0% but less than 15.0%.

The martensite area ratio can be measured by using, for example, electron back scattering diffraction (EBSD) crystallographic orientation analysis. Specifically, first, with use of an EBSD detector that is mounted on a scanning electron microscopy (SEM), an EBSD pattern in a cross section of the stainless steel is obtained. The following are examples of conditions for obtaining the EBSD pattern.

- Plane to be measured: L cross section (a cross section that is obtained by cutting along a plane which is parallel to a rolling direction of the hot rolling and cold rolling and which is perpendicular to a rolling width direction of these rollings)
- Measurement magnification: 250 times to 800 times
- Area to be measured: 100 pm to 300 pm square
- Measuring pitch (step size): 0.3 pm to 0.8 pm

Then, the EBSD pattern thus obtained is converted to an Image Quality (IQ) image by OIM analysis software. The IQ image is an image analysis which represents sharpness. The martensite phase has a more complicated internal structure than the ferrite phase, and the sharpness of the martensite phase is low. Accordingly, the martensite phase appears darker in the IQ image. On the other hand, the ferrite phase has a simpler internal structure than the martensite phase, and the sharpness of the ferrite phase is high. Accordingly, the ferrite phase appears brighter in the IQ image. It is possible to calculate the martensite area ratio, by binarizing the IQ image and dividing the area of the martensite phase by the area of a whole of the stainless steel.

[Yield elongation and elongation after fracture]

The yield elongation and elongation after fracture of the stainless steel can be measured, for example, by a tensile test specified in JIS Z 2241. In this case, it is possible to use, as a tensile test piece, for example, a test piece which has a shape that is specified as a JIS 13B test piece in JIS Z 2201. In the present embodiment, the stainless steel has a yield elongation of not more than 2.0% and the elongation after fracture of not less than 22.0%.

The present invention is not limited to the embodiments, but can be altered by a skilled person in the art within the scope of the claims. The present invention also encompasses, in its technical scope, any embodiment derived by combining technical means disclosed in differing embodiments.

Aspects of the present invention can also be expressed as follows:

A ferritic stainless steel in accordance with an aspect of the present invention includes not more than 0.12% of C, not more than 1.0% of Si, not more than 1.0% of Mn, not more than 1.0% of Ni, 12.0% to 18.0% of Cr, not more than 0.10% of N, and not more than 0.50% of Al, in percent by mass, and the other part composed of Fe and an inevitable impurity, the ferritic stainless steel having a martensite phase whose area ratio is not less than 1.0% but less than 15.0% in a cross section obtained by cutting along a plane that is parallel to a rolling direction and that is also perpendicular to a rolling width direction, and a remaining part mainly composed of a ferrite phase, the remaining part being obtained by removing the martensite phase from the ferritic stainless steel, and the ferritic stainless steel having a yield elongation of not more than 2.0% and an elongation after fracture of not less than 22.0%.

In the above configuration, the yield elongation of the ferritic stainless steel can be decreased while a high elongation after fracture of the ferritic stainless steel is maintained. When the elongation after fracture is higher, press formability of the ferritic stainless steel is more preferable. When the yield elongation is lower, stretcher strains are reduced more. This makes it possible to provide a ferritic stainless steel which can reduce stretcher strains even without temper rolling and which has high press formability.

Further, a ferritic stainless steel in accordance with an aspect of the present invention has an index value of not less than 15 and not more than 50, the index value indicating a maximum amount of an austenite phase generated by annealing and being expressed by the following expression (1):

$$(\text{Index value}) = 420\text{C} - 11.5\text{Si} + 7\text{Mn} + 23\text{Ni} - 11.5\text{Cr} - 12\text{Mo} + 9\text{Cu} - 49\text{Ti} - 52\text{Al} + 470\text{N} + 189 \cdots (1),$$

where each of element symbols indicates a percent-by-mass concentration of an element represented by the element symbol.

In the above configuration, the index value is not less than 15 and not more than 50. It should be noted here that the austenite phase that is generated during annealing may be transformed to the martensite phase in a cooling process. The maximum amount of the austenite phase generated by annealing is controlled by setting the index value to not less than 15 and not more than 50. This makes it easy to appropriately regulate the amount of the martensite phase which is generated in the cooling process. This consequently makes it possible to more easily provide a ferritic stainless steel which can reduce stretcher strains even without temper rolling and which has high press formability.

Further, a ferritic stainless steel in accordance with an aspect of the present invention may further contain one or more kinds selected from not more than 0.50% of Mo, not more than 1.0% of Cu, not more than 0.01% of O, not more than 0.15% of V, not more than 0.10% of B, and not more than 0.50% of Ti, in percent by mass.

In the above configuration, in a case where not more than 0.5% of Mo is contained, it is possible to improve corrosion resistance of the ferritic stainless steel and to reduce increase in raw material cost of the ferritic stainless steel. In a case where not more than 1.0% of Cu is contained, it is possible to improve the corrosion resistance of the ferritic stainless steel. In a case where not more than 0.01% of O is contained, it is possible to improve an impact value and fatigue life. In a case where not more than 0.15% of V is contained, it is possible to effectively improve hardness and strength of the ferritic stainless steel. In a case where not more than 0.10% of B is contained, it is possible to effectively improve toughness of the ferritic stainless steel. In a case where not more than 0.50% of Ti is contained, it is possible to not only reduce stretcher strains but also reduce increase in the raw material cost.

Further, a ferritic stainless steel in accordance with an aspect of the present invention may further contain one or more kinds selected from 0.01% to 0.50% of Co, 0.01% to 0.10% of Zr, 0.01% to 0.10% of Nb, 0.0005% to 0.0030% of Mg, 0.0003% to 0.0030% of Ca, 0.01% to 0.20% of Y, 0.01% to 0.10% in total of a rare earth metal excluding Y, 0.001% to 0.500% of Sn, 0.001% to 0.500% of Sb, 0.01% to 0.10% of Pb, and 0.01% to 0.50% of W.

In the above configuration, in a case where 0.01% to 0.50% of Co is contained, it is possible to improve the corrosion resistance and heat resistance. In a case where 0.01% to 0.10% of Zr is contained, it is possible to effectively carry out denitrification, deoxidation, and desulfurization. In a case where 0.01% to 0.10% of Nb is contained, it is possible to not only reduce stretcher strains but also reduce increase in the raw material cost. In a case where 0.0003% to 0.0030% of Ca is contained, it is possible to improve a degassing property. In a case where 0.01% to 0.20% of Y is contained, it is possible to effectively improve hot workability and oxidation resistance. In a case where a rear earth metal excluding Y is contained in a range of 0.01% to 0.10% in total, it is possible to effectively improve the hot workability and the oxidation resistance. In a case where 0.001% to 0.500% of Sn is contained, it is possible to improve the corrosion resistance. In a case where 0.01% to 0.10% of Pb is contained, it is possible to improve free machinability. In a case where 0.01% to 0.50% of W is contained, it is possible to improve high-temperature strength.

Further, a method for producing a ferritic stainless steel in accordance with an aspect of the present invention includes: a hot rolling step of preparing a hot-rolled steel sheet by hot rolling of a steel slab containing not more than 0.12% of C, not more than 1.0% of Si, not more than 1.0% of Mn, not more than 1.0% of Ni, 12.0% to 18.0% of Cr, not more than 0.10% of N, and not more than 0.50% of Al, in percent by mass, and the other part composed of Fe and an inevitable impurity, the steel slab having an index value of not less than 15 and not more than 50, the index value being expressed by the following expression (2):

$$(\mathrm{Index\ value}) = 420\mathrm{C} - 11.5\mathrm{Si} + 7\mathrm{Mn} + 23\mathrm{Ni} - 11.5\mathrm{Cr} - 12\mathrm{Mo} + 9\mathrm{Cu} - 49\mathrm{Ti} - 52\mathrm{Al} + 470\mathrm{N} + 189 \cdots (2),$$

where each of element symbols indicates a percent-by-mass concentration of an element represented by the element symbol; a cold rolling step of preparing a cold-rolled steel sheet by cold rolling of the hot-rolled steel sheet after the hot rolling step; and an annealing step of annealing the cold-rolled steel sheet after the cold rolling step, in the annealing step, with regard to TA of the steel slab, the TA being expressed by the following expression (3):

$$TA = 35 \times (\mathrm{Cr} + 1.72\mathrm{Mo} + 2.09\mathrm{Si} + 4.86\mathrm{Nb} + 8.29\mathrm{V} + 1.77\mathrm{Ti} + 21.4\mathrm{Al} + 40\mathrm{B} - 7.14\mathrm{C} - 8.0\mathrm{N} - 3.24\mathrm{Ni} - 1.89\mathrm{Mn} - 0.51\mathrm{Cu}) + 310 \cdots (3)$$

where each of element symbols indicates a percent-by-mass concentration of the element, for annealing, the highest annealing temperature (°C) being set to not less than $0.65 \times TA + 291$ and not more than $1.10 \times TA - 48$ in a case where the TA of the steel slab is less than 921, the highest annealing temperature (°C) being set to not less than $0.65 \times TA + 291$ and not more than 1050°C in a case where the TA of the steel slab is not less than 921, and a cooling rate being set to not less than 5.0°C/s.

In the above method, the highest annealing temperature in the annealing step is appropriately set in accordance with the composition of the ferritic stainless steel. At the same time, the cooling rate is appropriately regulated. Therefore, the area ratio of the martensite phase can be more reliably controlled to be within a range of not less than 1.0% but less than 15.0%. This consequently makes it possible to more reliably produce a ferritic stainless steel which can reduce stretcher strains even without temper rolling and which has high press formability.

Further, a method for producing a ferritic stainless steel in accordance with an aspect of the present invention may further include a softening step of softening, by heat treatment, the hot-rolled steel sheet after the hot rolling step and before the cold rolling step, the heat treatment being carried out at a temperature of not less than 500°C and not more than 1100°C. This method further includes the softening step. This consequently makes it possible to reduce wrinkles (stretcher strains) which would occur in parallel to the rolling direction during a press process or a tension process of the ferritic stainless steel.

In a method for producing a ferritic stainless steel in accordance with an aspect of the present invention, in the annealing step, a temperature increase rate may be not less than 10°C/s. This method makes it possible to shorten a heating-up period in the annealing step. This consequently makes it possible to shorten time necessary for production of the ferritic stainless steel. Therefore, it is possible to improve productivity of the ferritic stainless steel. Further, the temperature increase rate in the annealing step is appropriately regulated. Therefore, the area ratio of the martensite phase can be more reliably controlled to be within the range of not less than 1.0% but less than 15.0%. This consequently makes it possible to further reliably produce a ferritic stainless steel which can reduce stretcher strains even without temper rolling and which has high press formability.

In a method for producing a ferritic stainless steel in accordance with an aspect of the present invention, in the annealing step, a soaking time at the highest annealing temperature may be not less than 5 seconds. In this method, the soaking time in the annealing step is appropriately regulated. Therefore, the area ratio of the martensite phase can be more reliably controlled to be within the range of not less than 1.0% but less than 15.0%. This consequently makes it possible to further reliably produce a ferritic stainless steel which can reduce stretcher strains even without temper rolling and which has high press formability. Examples

The following description will discuss Examples of the present invention. Respective steel slabs of Ex1 to Ex10 and CE1 to CE3 of 13 types of composition shown in Table 1 were each prepared by melting steel in an actual operation line. Note that Table 1 also shows respective index values calculated from the types of composition of Ex1 to Ex10 and CE1 to CE3.

[Table 1]

Composition of Examples and Comparative Examples

| Composition | C | Si | Mn | P | 8 | Ni | Cr | N | Al | Mo | Cu | O | V | B | Ti | Nb | Index value |
|---|---|---|---|---|---|---|---|---|---|---|---|---|---|---|---|---|---|
| Ex1 | 0.064 | 0.39 | 0.77 | 0.027 | 0.002 | 0.29 | 16.15 | 0.02 | 0.003 | 0.13 | 0.07 | 0.0014 | 0.002 | 0.001 | 0.006 | 0.007 | 46 |
| Ex2 | 0.063 | 0.49 | 0.32 | 0.028 | 0.001 | 0.11 | 16.45 | 0.012 | 0.063 | 0.02 | 0.03 | 0.0013 | 0.003 | 0.001 | 0.003 | 0.004 | 28 |
| Ex3 | 0.07 | 0.60 | 0.42 | 0.022 | 0.001 | 0.27 | 16.24 | 0.017 | 0.005 | 0.11 | 0.06 | 0.0013 | 0.003 | 0.001 | 0.017 | 0.003 | 40 |
| Ex4 | 0.039 | 0.24 | 0.34 | 0.026 | 0.001 | 0.09 | 16.25 | 0.024 | 0.097 | 0.03 | 0.02 | 0.0016 | 0.064 | 0.001 | 0.006 | 0.004 | 26 |
| Ex5 | 0.040 | 0.22 | 0.33 | 0.025 | 0.001 | 0.12 | 16.33 | 0.024 | 0.005 | 0.33 | 0.03 | 0.0014 | 0.004 | 0.001 | 0.005 | 0.006 | 28 |
| Ex6 | 0.038 | 0.24 | 0.35 | 0.022 | 0.001 | 0.11 | 16.23 | 0.021 | 0.006 | 0.03 | 0.02 | 0.0013 | 0.004 | 0.001 | 0.007 | 0.07 | 30 |
| Ex7 | 0.037 | 0.21 | 0.36 | 0.023 | 0.001 | 0.10 | 16.21 | 0.018 | 0.007 | 0.02 | 0.03 | 0.0013 | 0.110 | 0.001 | 0.008 | 0.004 | 28 |
| Ex8 | 0.039 | 0.24 | 0.32 | 0.021 | 0.001 | 0.09 | 16.24 | 0.022 | 0.003 | 0.03 | 0.03 | 0.0016 | 0.003 | 0.010 | 0.005 | 0.005 | 30 |
| Ex9 | 0.041 | 0.25 | 0.33 | 0.019 | 0.001 | 0.08 | 16.16 | 0.018 | 0.003 | 0.02 | 0.02 | 0.0014 | 0.003 | 0.001 | 0.21 | 0.006 | 20 |
| Ex10 | 0.040 | 0.22 | 0.31 | 0.027 | 0.001 | 0.12 | 16.18 | 0.017 | 0.007 | 0.03 | 0.6 | 0.0014 | 0.002 | 0.001 | 0.003 | 0.006 | 35 |
| CE1 | 0.150 | 0.23 | 0.35 | 0.026 | 0.001 | 0.14 | 16.55 | 0.024 | 0.008 | 0.02 | 0.02 | 0.0014 | 0.002 | 0.001 | 0.004 | 0.007 | 75 |
| CE2 | 0.050 | 0.23 | 0.33 | 0.026 | 0.001 | 0.15 | 21.3 | 0.023 | 0.006 | 0.02 | 0.02 | 0.0012 | 0.002 | 0.001 | 0.006 | 0.005 | -22 |
| CE3 | 0.062 | 0.22 | 0.31 | 0.025 | 0.001 | 0.16 | 12.2 | 0.023 | 0.005 | 0.02 | 0.03 | 0.0011 | 0.002 | 0.001 | 0.007 | 0.007 | 88 |

(Unit of content: mass%)

EP 4 134 461 A1

Numerical values underlined in Table 1 each indicate a value that falls outside a preferred range in an embodiment of the present invention. As shown in Table 1, each of all of Ex1 to Ex10 was made up of the following (in percent by mass): not more than 0.12% of C, not more than 1.0% of Si, not more than 1.0% of Mn, not more than 1.0% of Ni, 12.0% to 18.0% of Cr, not more than 0.10% of N, and not more than 0.50% of Al; and the other part composed of Fe and an inevitable impurity. Further, each of all of Ex1 to Ex10 had an index value of not less than 15 and not more than 50. Note that in composition of each of Ex5, Ex6, Ex7, Ex8, Ex9 and Ex10, respective contents of Mo, Nb, V, B, Ti and Cu were higher than those in the other types of composition.

On the other hand, CE1 had a C content of more than 0.12% and an index value of more than 50. CE2 had a Cr content of more than 18.0% and an index value of less than 15. CE3 had an index value of more than 50.

Next, the steel slab of each of the above types of composition was subjected to hot rolling, so that a hot-rolled steel sheet was prepared. The hot-rolled steel sheet had a plate thickness of 3 mm and a plate width of 150 mm. Thereafter, the hot-rolled steel sheet was softened by heat treatment for 30 seconds at 980°C, and then subjected to cold rolling, so that a cold-rolled steel sheet was prepared. The cold-rolled steel sheet had a plate thickness of 1 mm and a plate width of 150 mm.

Next, the cold-rolled steel sheet of each of the types of composition was annealed under actual annealing conditions shown in Table 2, so that a stainless steel was produced. Table 2 also shows respective recommended annealing temperatures which were calculated from the types of composition in Table 1. Specifically, first, with regard to the types of composition of the steel slabs, the following is assumed: $TA = 35 \times (Cr + 1.72Mo + 2.09Si + 4.86Nb + 8.29V + 1.77Ti + 21.4Al + 40B - 7.14C - 8.0N - 3.24Ni - 1.89Mn - 0.51Cu) + 310$. Then, in a case where TA was less than 921, the lower limit of the recommended annealing temperature (°C) was set to $0.65 \times TA + 291$ and the upper limit of the recommended annealing temperature (°C) was set to $1.10 \times TA - 48$. On the other hand, in a case where TA was not less than 921, the lower limit of the recommended annealing temperature (°C) was set to $0.65 \times TA + 291$ and the upper limit was set to 1050°C. For example, with respect to Ex4 and CE2, since TA is not less than 921, the upper limit of the recommended annealing temperature was set to 1050°C.

The following description, for each of stainless steels, the type of composition is connected, by "-", with the number given to the actual annealing conditions. A combination of the type and the number thus connected indicates a stainless steel which was obtained by annealing a cold-rolled steel sheet of each of the types of composition under the annealing conditions. For example, "stainless steel Ex1-2" refers to a stainless steel which was obtained by annealing the cold-rolled steel sheet of the composition of Ex1 under annealing conditions 2 (highest annealing temperature: 832°C, soaking time: 5 seconds, and cooling rate: 30° C/s).

Table 2 also shows results of measurement of physical properties of each of the stainless steels. Specifically, for each of the stainless steels, a martensite area ratio was measured by using EBSD crystallographic orientation analysis. Further, from each of the stainless steels, a JIS 13B test piece as specified in JIS Z 2201 was cut out along a rolling direction. Then, the tensile testing as specified in JIS Z 2241 was performed. The yield elongation and the elongation after fracture of each of the stainless steels were thus measured. A lower yield elongation results in more reduction in stretcher strains during press forming. Further, a higher elongation after fracture results in a higher ductility of the stainless steel and more preferable press formability.

[Table 2]

Annealing conditions and results of measurement of physical properties

| Composition | TA | Recommended annealing temperature (°C) | | Actual annealing conditions | | | | | Tissue observation | Mechanical properties | | | |
|---|---|---|---|---|---|---|---|---|---|---|---|---|---|
| | | Lower limit | Upper limit | Number | Temperature increase rate (°C/s) | Highest annealing temperature (°C) | Soaking time (s) | Cooling rate (°C/s) | Martensite area ratio (%) | Yield stress (MPa) | Yield elongation (%) | Tensile strength (MPa) | Elongation after fracture (%) |
| Ex1 | 811 | 818 | 844 | 1 | 15 | 764 | 5 | 30 | 0.01 | 340 | 4.2 | 472 | 30.6 |
| | | | | 2 | 15 | 832 | 5 | 30 | 9.1 | 270 | 0.0 | 511 | 26.6 |
| | | | | 3 | 15 | 830 | 5 | 50 | 11.3 | 251 | 0.0 | 545 | 25.2 |
| | | | | 4 | 15 | 830 | 5 | 2 | 0.7 | 331 | 3.4 | 475 | 31.3 |
| | | | | 5 | 15 | 901 | 5 | 30 | 34.6 | 468 | 0.0 | 732 | 18.3 |
| Ex2 | 920 | 889 | 964 | 1 | 15 | 849 | 5 | 30 | 0.01 | 341 | 3.8 | 454 | 29.9 |
| | | | | 2 | 15 | 905 | 5 | 30 | 1.7 | 325 | 1.9 | 484 | 28.5 |
| | | | | 3 | 15 | 918 | 5 | 30 | 4.3 | 300 | 1.2 | 495 | 28.4 |
| | | | | 4 | 15 | 933 | 20 | 30 | 5.9 | 282 | 0.9 | 511 | 28.6 |
| | | | | 5 | 15 | 932 | 5 | 6 | 1.6 | 343 | 1.8 | 464 | 30.2 |
| | | | | 6 | 15 | 928 | 10 | 10 | 3.3 | 301 | 1.9 | 488 | 28.2 |
| | | | | 7 | 15 | 934 | 5 | 20 | 4.7 | 303 | 1.5 | 493 | 29.3 |
| | | | | 8 | 15 | 934 | 5 | 50 | 10.4 | 267 | 0.0 | 552 | 27.5 |
| | | | | 9 | 15 | 930 | 5 | 2 | 0.8 | 348 | 3.5 | 462 | 31.1 |
| | | | | 10 | 15 | 952 | 5 | 30 | 11.2 | 268 | 0.0 | 548 | 26.3 |
| | | | | 11 | 15 | 953 | 5 | 50 | 14.5 | 402 | 0.0 | 582 | 25.5 |
| | | | | 12 | 15 | 1003 | 5 | 30 | 16 | 420 | 0.0 | 590 | 21.8 |
| Ex3 | 855 | 847 | 892 | 1 | 15 | 802 | 5 | 30 | 0.01 | 348 | 3.1 | 461 | 29.6 |
| | | | | 2 | 15 | 864 | 5 | 30 | 7 | 276 | 0.3 | 511 | 27.9 |
| | | | | 3 | 15 | 928 | 5 | 30 | 24 | 445 | 0.0 | 654 | 21.4 |
| Ex4 | 942 | 903 | 1050 | 1 | 15 | 860 | 5 | 30 | 0.01 | 348 | 3.6 | 463 | 29.8 |
| | | | | 2 | 15 | 920 | 5 | 30 | 6 | 288 | 0.7 | 499 | 27.5 |
| | | | | 3 | 15 | 960 | 30 | 30 | 6.3 | 272 | 0.3 | 512 | 28.2 |
| | | | | 4 | 15 | 960 | 5 | 7 | 1.7 | 345 | 1.8 | 470 | 28.9 |
| | | | | 5 | 15 | 960 | 5 | 15 | 3.6 | 302 | 1.9 | 497 | 29.4 |
| | | | | 6 | 15 | 960 | 5 | 50 | 8.3 | 277 | 0.0 | 522 | 26.8 |
| | | | | 7 | 15 | 960 | 5 | 3 | 0.6 | 363 | 3.6 | 467 | 32.1 |
| | | | | 8 | 15 | 1030 | 5 | 30 | 9 | 278 | 0.0 | 533 | 27.3 |

[Table 2] (Cont.)

| Composition | TA | Recommended annealing temperature (°C) | | Actual annealing conditions | | | | | Tissue observation | Mechanical properties | | | |
|---|---|---|---|---|---|---|---|---|---|---|---|---|---|
| | | Lower limit | Upper limit | Number | Temperature increase rate (°C/s) | Highest annealing temperature (°C) | Soaking time (s) | Cooling rate (°C/s) | Martensite area ratio (%) | Yield stress (MPa) | Yield elongation (%) | Tensile strength (MPa) | Elongation after fracture (%) |
| Ex5 | 872 | 858 | 912 | 1 | 15 | <u>833</u> | 5 | 30 | <u>0.01</u> | 348 | <u>3.8</u> | 468 | 30.2 |
| | | | | 2 | 15 | 872 | 5 | 30 | 5.8 | 293 | 0.9 | 489 | 28.1 |
| Ex6 | 865 | 854 | 904 | 1 | 15 | <u>845</u> | 5 | 30 | <u>0.01</u> | 348 | <u>3.5</u> | 474 | 30.6 |
| | | | | 2 | 15 | 880 | 5 | 30 | 7.5 | 277 | 0.4 | 511 | 27.9 |
| Ex7 | 884 | 865 | 924 | 1 | 15 | <u>842</u> | 5 | 30 | <u>0.01</u> | 348 | <u>3.2</u> | 474 | 31.2 |
| | | | | 2 | 15 | 878 | 5 | 30 | 3.7 | 313 | 1.7 | 481 | 29.6 |
| Ex8 | 868 | 855 | 907 | 1 | 15 | <u>923</u> | 5 | 30 | <u>33</u> | 446 | 0.0 | 687 | <u>19.8</u> |
| | | | | 2 | 15 | 874 | 5 | 30 | 13.2 | 388 | 0.0 | 546 | 16.4 |
| Ex9 | 867 | 855 | 906 | 1 | 15 | <u>940</u> | 5 | 30 | <u>25</u> | 423 | 0.0 | 633 | <u>21.8</u> |
| | | | | 2 | 15 | 868 | 5 | 30 | 5.8 | 293 | 0.9 | 492 | 29.1 |
| Ex10 | 843 | 839 | 879 | 1 | 15 | <u>905</u> | 5 | 30 | <u>22</u> | 411 | 0.0 | 598 | <u>20.9</u> |
| | | | | 2 | 15 | 855 | 5 | 30 | 4.3 | 307 | 1.3 | 485 | 28.9 |
| CE1 | 833 | 833 | 868 | - | 15 | 850 | 5 | 30 | <u>69.3</u> | 733 | 0.0 | 1045 | <u>12.7</u> |
| CE2 | 1023 | 956 | 1050 | - | 15 | 970 | 5 | 30 | <u>0.01</u> | 378 | <u>3.8</u> | 464 | 30.6 |
| CE3 | 701 | 746 | 723 | - | 15 | <u>730</u> | 5 | 30 | <u>80.2</u> | 891 | 0.0 | 1178 | <u>9.7</u> |

Numerical values underlined in Table 2 each indicate a value that falls outside a preferred range in an embodiment of the present invention. As shown in Table 2, in the cases of the stainless steels Ex1-1, Ex2-1, Ex3-1, Ex4-1, Ex5-1, Ex6-1 and Ex7-1, the highest annealing temperature in the actual annealing conditions was lower than the lower limit of the recommended annealing temperature. The martensite area ratios of these stainless steels were as low as less than 1.0%. Meanwhile, the yield elongation of each of these stainless steels was more than 2.0%. It is therefore suggested that these stainless steels tend to cause stretcher strains. It is inferred that these stainless steels each had such a low martensite area ratio because due to a low highest annealing temperature, generation of the austenite phase was difficult, the austenite phase becoming the martensite phase by phase transformation during cooling.

In the cases of the stainless steels Ex1-5, Ex2-12, Ex3-3, Ex8-1, Ex9-1 and Ex10-1, the highest annealing temperature in the actual annealing conditions was higher than the upper limit of the recommended annealing temperature. The martensite area ratios of these stainless steels were as high as not less than 15.0%. Meanwhile, the elongation after fracture of each of these stainless steels was as low as less than 22.0%. It is therefore suggested that these stainless steels have low press formability. It is inferred that these stainless steels each had such a high martensite area ratio because due to a high highest annealing temperature, a large amount of austenite was generated and consequently, the martensite phase was generated more than necessary during cooling.

In the cases of the stainless steels Ex1-4, Ex2-9 and Ex4-7, the cooling rate in the actual annealing conditions was less than 5.0°C/s. The martensite area ratios of these stainless steels were as low as less than 1.0%. Meanwhile, the yield elongation of each of these stainless steels was more than 2.0%. It is therefore suggested that these stainless steels tend to cause stretcher strains. It is inferred that these stainless steels each had such a low martensite area ratio because, since cooling from the highest annealing temperature took time, the austenite phase transformed to the ferrite phase in a stable state.

On the other hand, in the cases of the stainless steels Ex1-2, Ex1-3, Ex2-2 to Ex2-8, Ex2-10, Ex2-11, Ex3-2, Ex4-2 to EX4-6, Ex4-8, Ex5-2, Ex6-2, Ex7-2, Ex8-2, Ex9-2 and Ex10-2 (hereinafter, these are collectively referred to as "stainless steel ExG"), the highest annealing temperature was within the recommended annealing temperature. Further, the soaking time was not less than 5 seconds, and the cooling rate was not less than 5°C/s.

As described above, each of all of Ex1 to Ex10 was made up of the following (in percent by mass): not more than 0.12% of C, not more than 1.0% of Si, not more than 1.0% of Mn, not more than 1.0% of Ni, 12.0% to 18.0% of Cr, not more than 0.10% of N, and not more than 0.50% of Al; and the other part composed of Fe and an inevitable impurity. Further, each of all of Ex1 to Ex10 had an index value of not less than 15 and not more than 50. For each of Ex1 to Ex10 having such composition, the martensite area ratio of the stainless steel ExG was not less than 1.0% but less than 15.0% as a result of regulating the annealing conditions within preferred ranges. Then, since the martensite area ratio of the stainless steel ExG was set within a predetermined range, the stainless steel ExG had a yield elongation of not more than 2.0% and an elongation after fracture of not less than 22.0%.

Since the yield elongation is not more than 2.0%, it is possible to reduce stretcher strains in the stainless steel ExG. Further, since the elongation after fracture is not less than 22.0%, it is suggested that the stainless steel ExG has preferable press formability.

Next, the following examines CE1 to CE3 which had respective index values shown in Table 1 outside a range of 15 to 50. As shown in Table 2, in the case of CE1, even when annealing was carried out under the condition in which the highest annealing temperature was set to 850°C that was within a range of the recommended annealing temperature, the martensite area ratio was as high as 69.3% and the elongation after fracture was as low as 12.7%. It is inferred that such a martensite area ratio and such an elongation at brake were obtained because, since the content of C was more than 0.12% and the index value was more than 50, the amount of austenite generated at the highest annealing temperature was large and the martensite phase was generated more than necessary during cooling.

In CE2, even when annealing was carried out under the condition in which the highest annealing temperature was set to 970°C that was within the range of the recommended annealing temperature, the martensite area ratio was as low as 0.01% and the yield elongation was as high as 3.8%. It is inferred that such a martensite area ratio and such a yield elongation were obtained because, since the content of Cr was more than 18.0% and the index value was less than 15, the ferrite phase was stabilized more than necessary and accordingly, generation of the austenite phase was difficult during annealing.

In CE3, the lower limit (746°C) of the recommended annealing temperature was higher than the upper limit (723°C), and more specifically, the range of the recommended annealing temperature could not be defined. In light of the above, the highest annealing temperature was set to 730°C, which was between the above two values, and annealing was carried out. As a result, the martensite area ratio was as high as 80.2% and the elongation after fracture was as low as 9.7%. It is inferred that such a martensite area ratio and such an elongation at brake were obtained because, since the index value was more than 50, the amount of austenite generated at the highest annealing temperature was large and the martensite phase was generated more than necessary during cooling.

Industrial Applicability

The present invention is applicable to a ferritic stainless steel and a method for producing the ferritic stainless steel.

Reference Signs List

S1　melting step
S2　hot rolling step
S3　softening step
S4　cold rolling step
S5　annealing step

**Claims**

1. A ferritic stainless steel comprising

   not more than 0.12% of C, not more than 1.0% of Si, not more than 1.0% of Mn, not more than 1.0% of Ni, 12.0% to 18.0% of Cr, not more than 0.10% of N, and not more than 0.50% of Al, in percent by mass, and the other part composed of Fe and an inevitable impurity,
   the ferritic stainless steel having a martensite phase whose area ratio is not less than 1.0% but less than 15.0% in a cross section obtained by cutting along a plane that is parallel to a rolling direction and that is also perpendicular to a rolling width direction, and a remaining part mainly composed of a ferrite phase, the remaining part being obtained by removing the martensite phase from the ferritic stainless steel, and
   the ferritic stainless steel having a yield elongation of not more than 2.0% and an elongation after fracture of not less than 22.0%.

2. The ferritic stainless steel according to claim 1, having an index value of not less than 15 and not more than 50, the index value indicating a maximum amount of an austenite phase generated by annealing and being expressed by the following expression (1):

$$(\text{Index value}) = 420\text{C} - 11.5\text{Si} + 7\text{Mn} + 23\text{Ni} - 11.5\text{Cr} -$$

$$12\text{Mo} + 9\text{Cu} - 49\text{Ti} - 52\text{Al} + 470\text{N} + 189 \cdots (1),$$

   where each of element symbols indicates a percent-by-mass concentration of an element represented by the element symbol.

3. The ferritic stainless steel according to claim 1 or 2, further comprising
   one or more kinds selected from not more than 0.50% of Mo, not more than 1.0% of Cu, not more than 0.01% of O, not more than 0.15% of V, not more than 0.10% of B, and not more than 0.50% of Ti, in percent by mass.

4. The ferritic stainless steel according to any one of claims 1 to 3, further comprising
   one or more kinds selected from 0.01% to 0.50% of Co, 0.01% to 0.10% of Zr, 0.01% to 0.10% of Nb, 0.0005% to 0.0030% of Mg, 0.0003% to 0.0030% of Ca, 0.01% to 0.20% of Y, 0.01% to 0.10% in total of a rare earth metal excluding Y, 0.001% to 0.500% of Sn, 0.001% to 0.500% of Sb, 0.01% to 0.10% of Pb, and 0.01% to 0.50% of W.

5. The ferritic stainless steel according to any one of claims 1 to 4, having a C content of not less than 0.030%.

6. A method for producing a ferritic stainless steel, comprising:

   a hot rolling step of preparing a hot-rolled steel sheet by hot rolling of a steel slab containing not more than 0.12% of C, not more than 1.0% of Si, not more than 1.0% of Mn, not more than 1.0% of Ni, 12.0% to 18.0% of Cr, not more than 0.10% of N, and not more than 0.50% of Al, in percent by mass, and the other part composed of Fe and an inevitable impurity,
   the steel slab having an index value of not less than 15 and not more than 50, the index value being expressed by the following expression (2):

$$(Index\ value) = 420C - 11.5Si + 7Mn + 23Ni - 11.5Cr - 12Mo + 9Cu - 49Ti - 52Al + 470N + 189 \cdots (2),$$

where each of element symbols indicates a percent-by-mass concentration of an element represented by the element symbol;
a cold rolling step of preparing a cold-rolled steel sheet by cold rolling of the hot-rolled steel sheet after the hot rolling step; and
an annealing step of annealing the cold-rolled steel sheet after the cold rolling step,
in the annealing step,

with regard to TA of the steel slab, the TA being expressed by the following expression (3):

$$TA = 35 \times (Cr + 1.72Mo + 2.09Si + 4.86Nb + 8.29V + 1.77Ti + 21.4Al + 40B - 7.14C - 8.0N - 3.24Ni - 1.89Mn - 0.51Cu) + 310 \cdots (3)$$

where each of element symbols indicates a percent-by-mass concentration of the element,
for annealing,

the highest annealing temperature (°C) being set to not less than $0.65 \times TA + 291$ and not more than $1.10 \times TA - 48$ in a case where the TA of the steel slab is less than 921,
the highest annealing temperature (°C) being set to not less than $0.65 \times TA + 291$ and not more than 1050°C in a case where the TA of the steel slab is not less than 921, and
a cooling rate being set to not less than 5.0°C/s.

7. The method according to claim 6, further comprising a softening step of softening, by heat treatment, the hot-rolled steel sheet after the hot rolling step and before the cold rolling step, the heat treatment being carried out at a temperature of not less than 500°C and not more than 1100°C.

8. The method according to claim 6 or 7, wherein
in the annealing step, a temperature increase rate is not less than 10°C/s.

9. The method according to any one of claims 6 to 8, wherein
in the annealing step, a soaking time at the highest annealing temperature is not less than 5 seconds.

## FIG. 1

```
        ( START )
            │
  ┌──────────────────────┐
  │    MELTING STEP      │ ─ S1
  └──────────────────────┘
            │
  ┌──────────────────────┐
  │   HOT ROLLING STEP   │ ─ S2
  └──────────────────────┘
            │
  ┌──────────────────────┐
  │   SOFTENING STEP     │ ─ S3
  └──────────────────────┘
            │
  ┌──────────────────────┐
  │   COLD ROLLING STEP  │ ─ S4
  └──────────────────────┘
            │
  ┌──────────────────────┐
  │   ANNEALING STEP     │ ─ S5
  └──────────────────────┘
            │
        (  END  )
```

## INTERNATIONAL SEARCH REPORT

| | International application No. |
|---|---|
| | PCT/JP2021/012196 |

**A. CLASSIFICATION OF SUBJECT MATTER**
Int.Cl. C22C38/00(2006.01)i, C21D9/46(2006.01)i, C22C38/40(2006.01)i, C22C38/60(2006.01)i
FI: C22C38/00 302Z, C21D9/46R, C22C38/40, C22C38/60
According to International Patent Classification (IPC) or to both national classification and IPC

**B. FIELDS SEARCHED**

Minimum documentation searched (classification system followed by classification symbols)
Int.Cl. C22C38/00-38/60, C21D9/46

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/092713 A1 (JFE STEEL CORPORATION) 16 June 2016 (2016-06-16), claims, paragraphs [0047]-[0058] | 1-9 |
| X | JP 11-315353 A (KAWASAKI STEEL CORP.) 16 November 1999 (1999-11-16), claims, paragraphs [0024], [0032]-[0040] | 3-5 |
| A | | 1-2, 6-9 |
| A | JP 61-084329 A (NIPPON YAKIN KOGYO CO., LTD.) 28 April 1986 (1986-04-28) | 1-9 |
| A | JP 2006-118018 A (JFE STEEL CORPORATION) 11 May 2006 (2006-05-11) | 1-9 |
| A | KR 10-2004-0110644 A (POSCO) 31 December 2004 (2004-12-31) | 1-9 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 May 2021 | 08 June 2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

International application No.

PCT/JP2021/012196

| WO 2016/092713 A1 | 16 June 2016 | US 2017/0349984 A1<br>claims, paragraphs [0088]-[0113]<br>EP 3231882 A1<br>KR 10-2017-0078822 A<br>CN 107002199 A<br>TW 201621063 A |
| --- | --- | --- |
| JP 11-315353 A | 16 November 1999 | (Family: none) |
| JP 61-084329 A | 28 April 1986 | (Family: none) |
| JP 2006-118018 A | 11 May 2006 | (Family: none) |
| KR 10-2004-0110644 A | 31 December 2004 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3592840 B